# EUROPÄISCHE PATENTSCHRIFT

(11) **EP 1 515 611 B1**
(45) Veröffentlichungstag und Bekanntmachung des Hinweises auf die Patenterteilung: **30.09.2009**
(21) Anmeldenummer: 03761469.0
(22) Anmeldetag: 16.06.2003
(51) Int. Cl.: A21C 1/06, A21C 1/14, A21C 1/00, B01F 7/14, B01F 15/02

(54) **VERFAHREN UND VORRICHTUNG ZUR DOSIERUNG UND EINBRINGUNG VON ZUTATEN IN EINE KNETMASCHINE**
METHOD AND DEVICE FOR DOSING AND INTRODUCING INGREDIENTS INTO A KNEADING MACHINE
PROCEDE ET DISPOSITIF POUR DOSER ET INTRODUIRE DES INGREDIENTS DANS UN PETRIN

(30) Priorität: 27.06.2002 EP 02014308
(43) Veröffentlichungstag der Anmeldung: 23.03.2005
(73) Patentinhaber: SITOS Srl, 38068 Rovereto TN (IT)
(72) Erfinder: CAPOVILLA, Andrea, I-38060 Isera (IT); TORGHELE, Claudio, CH-6962 Viganello (CH); ALVISI, Cesare, I-37047 S. Bonifacio (IT)
(74) Vertreter: Oberosler, Ludwig
(86) Internationale Anmeldenummer: PCT/EP2003/006336
(87) Internationale Veröffentlichungsnummer: WO 2004/002228

(56) Entgegenhaltungen:
- EP-A- 1 151 788
- DE-C- 949 551
- US-A- 5 158 782
- PATENT ABSTRACTS OF JAPAN Bd. 0173, Nr. 15 (C-1071), 16. Juni 1993 (1993-06-16) & JP 05 030888 A (SANYO ELECTRIC CO LTD), 9. Februar 1993 (1993-02-09)
- DATABASE WPI Week 199220 Derwent Publications Ltd., London, GB; AN 1992-165308 XP002220441 & SU 1 667 791 A ((BREA) BREAD BACKING IND RES INST) 7. August 1991 (1991-08-07)

## Beschreibung

Die Erfindung bezieht sich auf ein Verfahren und auf die entsprechende Vorrichtung zur Dosierung und Einbringung von mehlartigen und flüssigen Zutaten in eine Knetmaschine für die Herstellung von kleinen Teigmengen, insbesondere von Teigportionen welche für die Zubereitung von Fladen, einzelner Pizzas und dergleichen geeignet ist.

Aus der WO 01/85323 ist eine Dosiervorrichtung für mehlartige Zutaten, welche auf eine Knetmaschine für die Herstellung von Teigportionen aufgebaut ist, bekannt; die Praxis hat gezeigt, dass diese Dosiervorrichtung, wegen der Veränderung des Mehlstandes im Behälter und wegen dem unterschiedlichen Füllgrad und/oder Komprimierungsgrad des Mehles im Dosierungshohlraum, nicht eine genügend präzise und gleichmäßige Dosierung für die Zubereitung von relativ kleinen Teigportionen ermöglicht. Dies wird weiters dadurch verschlimmert, dass auch die bekannten Beschickungssysteme für die flüssigen Zutaten (Wasser) nicht genügend präzise sind weil sie allgemein Pumpen, insbesondere Membranpumpen, Peristaltikpumpen oder Kolbenpumpen, einsetzen. Zwecks Einstellung der einzubringenden Menge an Flüssigkeit wird die Betriebszeit der Pumpe eingestellt; dieses System bewirkt Dosierungsfehler von ca. 7%. Wenn die Dosierung des Mehls mit einem Fehler erfolgt welcher ein Manko in Bezug auf die ideale Dosis bewirkt und hingegen die Dosierung des Wassers mit einem Fehler erfolgt welcher einen Überschuss in Bezug auf die ideale Dosis bewirkt, so wird der Teig in keiner Weise den Anforderungen für seine Weiterverarbeitung entsprechen. Das selbe geschieht bei einer Dosierung des Mehls mit Überschussfehler und einer Dosierung des Wassers mit Mankofehler. Wenn sich die oben erwähnten Fehler einstellen wird der Teig unbrauchbar sein und er muss als solcher von einem Überwachungssystem erkannt werden und ausgeschieden werden; aber auch im Falle von weniger ausgeprägten Dosierungsfehlem wird, insbesondere die Qualität des Endproduktes, nachteilig beeinflusst.

Aus der SU 1667791 A ist eine Vorrichtung zur Dosierung und Einbringung von Mehl und von flüssigen Komponenten in eine Knetmaschine für die Herstellung von größeren Mengen von Brotteig bekannt bei welcher, sei es die mehlartigen als auch die flüssigen Zutaten in spezifischen Messvorrichtungen dosiert werden, wobei diese gravimetrischen Messvorrichtungen unterhalb des betreffende Behälters der Zutaten und oberhalb der Knetmaschine angeordnet sind und wobei die Dosiermengen der mehlartigen Zutaten in die Knetmaschine eingeblasen werden. Mittels einer Bypassleitung wird die Förderluft und der darin schwebende Mehlstaub in die Beschickungsröhre der Dosiervorrichtung rückgeführt um die Staubbildung und den Verlust an Mehl zu reduzieren um eine schnelle Entleerung der Dosiervorrichtung zu erreichen. Eine derartige Dosiervorrichtung ist für Knetvorrichtungen welche die Teigmenge für einzelne Portionen, z.B. für jeweils einen Pizzafladen, ungeeignet weil die Dosierung des Mehles, insbesondere durch die Rückführung des Mehlstaubes über die Bypassleitung zu ungenau erfolgt.

Aus der US-A-5,158,782 ist eine Vorrichtung zur Dosierung und Einbringung von Mehl in eine Knetvorrichtung für die kontinuierliche Herstellung von Teig für die Produktion von Nudeln bekannt. Die Dosierung erfolgt rein volumetrisch und ohne Verdichtung der Mehlmenge so dass, in Abhängigkeit der Mehlart, des Mahlgrades, der Mehlfeuchtigkeit, sehr ungenaue Dosierungen erfolgen weiche für die Herstellung kleiner Teigportionen nicht geeignet sind.

Aus der EP-A-1151788 ist eine Vorrichtung zur Dosierung von Mehl für eine Knetmaschine zur Herstellung einzelner Teigportionen bekannt. Auch bei dieser Vorrichtung wird die Mehldosis nicht unter der Berücksichtigung der Mehlart, des Mahlgrades oder der Mehlfeuchtigkeit bestimmt, eine Verdichtung der Mehldosis ist nicht vorgesehen.

Die Erfindung stellt sich die Aufgabe ein Verfahren und eine entsprechende Vorrichtung zur Dosierung und Einbringung von Zutaten in eine Knetmaschine zu schaffen, welche für die Herstellung von kleinen Teigmengen, bzw. Teigportionen, geeignet ist, wobei die Vorrichtung einfach im Aufbau, leicht zerlegbar und reinigbar ist und das Verfahren geeignet ist Dosiermengen von beachtlicher Präzision zu garantieren so dass eventuelle Dosierfehler sehr beschränkt sind und nicht dazu führen, dass der Teig für die folgende Verarbeitung ungeeignet ist, bzw. nicht dazu führen, dass betreffend die Qualität des Endproduktes ein merkbarer Unterschied feststellbar ist.

Für die Lösung dieser Aufgabe schlägt die Erfindung für die mehlartigen Zutaten ein Dosiergerät mit Messbecher vor, welcher mit einem Stößel ausgestattet ist und welcher eventuell auf unterschiedlichem Füllstand beladbar ist, weiters dient dieser Messbecher auch für die Einbringung der Dosis in die Knetmaschine; für die flüssigen Zutaten hingegen wird ein Dosiergerät vorgeschlagen welches auf Gefälle arbeitet und ein doppelt wirkendes Ventil aufweist welches in der unteren Arbeitsposition das Füllen des, betreffend das Volumen, kalibrierbaren Messbechers ermöglicht während in der folgenden oberen Arbeitsposition der Abfluss der Dosis an Flüssigkeit durch Freigabe des Zuflusses von filtrierter Außenluft erfolgt.

Der Messbecher für die mehlartigen Zutaten hat vorzugsweise zylindrische Form und ist zwischen dem zylindrischen Behälter für das Mehl und der oberen, mit verstellbarem Schieber ausgestatteten, Öffnung der Knetmaschine eingebaut. Der zylindrische Messbecher ist im Umfangsbereich des kreisflächenförmigen Bodens des zylindrischen Mehlbehälters angebracht und wird progressiv durch ein sich drehendes, über Elektromotor angetriebenes, Speichenrad gefüllt. Das Speichenrad liegt auf dem Behälterboden auf und ist drehbar, zusammen mit Rührelementen, koaxial im zylindrischen Behälter gelagert. Die Freiräume, zwischen den radial abstehenden Speichen, welche ungefähr dem kreisrunden Querschnitt des Messbechers entsprechen, werden durch das Mehl welches darüber im Behälter gelagert ist gefüllt; durch Drehen des Speichenrades wird das Mehl in den Bereich über dem zylindrischen Messbecher gebracht wo es frei nach unten in den Messbecher fällt. Nach dem Vorbeibewegen von mehreren Freiräumen des Speichenrades wird, nachdem der Messbecher mit Mehl gefüllt ist, ein über dem Messbecher vorgesehener Stößel aktiviert um das im Messbecher enthaltene Mehl zu komprimieren. Anschließend, bei hochgefahrenem Stößel, wird erneut das Speichenrad angetrieben um den Freiraum welcher sich infolge der Kompression durch den Stößel gebildet hat, mit Mehl aufzufüllen. Diese Arbeitsgänge werden eventuell mehrmals wiederholt, bis der Messbecher randvoll mit Mehl gefüllt ist, der Komprimierungsgrad des Mehles hängt dabei von der Anzahl der Komprimierungszyklen des Stößels ab. Durch eine weitere Drehung des Speichenrades wird die Mehldosis eben zum Messbecherrand abgeschabt worauf sich der Schieber der Beschickungsöffnung der Knetmaschine öffnet und die Mehldosis durch den Stößel aus dem Messbecher geschoben wird um in den Knetraum zu fallen. Natürlich erfolgt die Bewegung des Speichenrades synchron zur Bewegung des Stößels und um den Messbecher mit Mehl zu füllen kann zuerst eine Drehung um einen bestimmten Winkel erfolgen so dass der Messbecher vollständig gefüllt wird, nach einer Komprimierungsfase durch den Stößel erfolgt eine weitere Drehung des Speichenrades um einen eventuell kleineren Winkel und schließlich, nach erfolgter Füllung und Komprimierung, wird durch erneute Drehung der Inhalt eben zum Rand des Messbechers abgeschabt.
Dieses Dosierverfahren ermöglicht es konstante, bemerkenswert präzise Mehldosiermengen zu erhalten mit der Möglichkeit die Anzahl der Komprimierzyklen aufgrund der Mehleigenschaften zu variieren.

Gemäß einer Weiterentwicklung des Erfindungsgedankens wird die Präzision der Mehldosierung dadurch verbessert, dass an Stelle des Messbechers mit vorgegebenem Messvolumen ein Messbecher mit, vorzugsweise teleskopisch veränderbarem Volumen vorgesehen wird und am Mehlbehälter und/oder am Messbecher das Gewicht der aus dem Mehlbehälter entnommenen Mehldosis erhoben wird. Auf diese Art ist es möglich die Dosierung zu verbessern indem, zum Beispiel Abweichungen wegen unterschiedlicher Granulation und/oder unterschiedlicher Feuchtigkeit des Mehles sowie wegen unterschiedlichem Füllstand im Mehlbehälter, beseitigt werden. Erfindungsgemäß sind in diesem Fall der Mehlbehälter und/oder der Messbecher auf einer oder auf mehreren Gewichts-Messzellen gelagert oder mit anderen bekannten Mitteln zur Gewichtsbestimmung ausgestattet. Gemäß dieser Variante gründet der Dosiervorgang mit Gewichtsbestimmung und Änderung des Volumens des Messbechers auf der empirischen Errechnung des Volumens des Messbechers unter vorrangiger Berücksichtigung der Granulation des Mehles oder indem das Volumen anhand von, durch Erhebungen von Gewicht/Volumen an Dosiermustern, erarbeiteten Tabellen bestimmt wird.
Anschließend an die Einstellung des teleskopisch veränderbaren Messbechers gemäß dem errechneten Volumen oder dem aus einer Tabelle entnommenen Wert, wird ein erster Dosiervorgang mit Gewichtserhebung des für die Dosierung aus dem Mehlbehälter entnommenen Mehles durchgeführt. Ein elektronisches Rechenprogramm errechnet aus dem Vergleich zwischen dem gewünschten Gewicht der Mehldosis und dem erhobenen Gewicht die Korrektur des ursprünglich eingestellten Volumens des Messbechers und somit die positive oder negative Änderung des Volumens. Dieser Vorgang der Gewichtüberprüfung und Volumenanpassung erfolgt an den nachfolgenden Dosiervorgängen bis ein Gewichtswert erreicht ist welcher, innerhalb enger Tolleranzen, sehr nahe am Sollwert liegt. Anschließend an diese Einstellfase des Volumens des Messbechers um den Sollwert der Mehldosis zu erreichen, können für jeden Dosiervorgang oder für Zyklen von mehreren Dosiervorgängen Überprüfungen durchgeführt werden um eventuell wiederholt den Sollwert anzupeilen.
Im Falle der Erhebung des Gewichtes direkt am Messbecher bietet sich die Möglichkeit der Korrektur an der selben Dosis an welcher das Gewicht erhoben worden ist indem teleskopisch das Volumen verändert wird und zwar bei Gewichtsüberschuss, indem anschließend der bereits beschriebene Schabvorgang wiederholt wird oder, bei Gewichtsmangel, indem der Füllvorgang, der Pressvorgang durch den Stößel und der Schabvorgang wiederholt werden. Die Erfindung schließt nicht die händische Änderung des Volumens des gegebenenfalls mit einer Messskala versehenen Messbechers aus.
Die Änderung des Volumens des Messbechers ermöglicht es auch bei Bedarf eine Änderung der Dosis vorzunehmen, wobei immer eine hohe Präzision der Gewichtsbestimmung auch für diese Dosis gegeben ist.

Der Dosierer für Wasser, bzw. für die flüssigen Zutaten, besteht erfindungsgemäß aus einem Messbecher welcher im oberen Bereich eine Öffnung für den Zufluss durch Gefälle aus einem Wasserbehälter und ein Ventil für den Zufluss von filtrierter atmosphärischer Luft aufweist, während im unteren Beeich der selbe Messbecher eine Abflussöffnung aufweist. Im Innern des Messbechers agiert ein doppelt wirkendes Ventil welches durch axiales, z.B. pneumatisches, Verschieben den Zufluss und Abfluss des Wassers und das Ventil für den Zufluss der atmosphärischen Luft steuert. Die Füllmenge des Messbechers kann durch Einlegen ins Innere des Messbechers von Ringen, welche unterschiedliche Volumen einnehmen, variiert werden.

Die Betätigung des doppelt wirkenden Ventils kann durch einen Pneumatik-Kolben, welcher in einem zum Messbecher koaxialem und unterhalb der Abflussöffnung vorgesehenem Zylinder verschiebbar ist, erfolgen. In diesem Fall ist die Kolbenstange, welche den Kolben mit dem doppelt wirkenden Ventil verbindet, rohrförmig und der Abfluss erfolgt durch die Kolbenstange hindurch. Es wird jedoch nicht ausgeschlossen, dass der Zylinder für den Pneumatik-Kolben koaxial über dem Messbecher angeordnet ist und in diesem Fall kann die Kolbenstange welche das doppelt wirkende Ventil bewegt vollen Querschnitt aufweisen.

Die Betätigung des Ventils für den Zufluss der atmosphärischen Luft, welche den freien Abfluss der Flüssigkeitsdosis aus dem Messbecher zur Knetmaschine bewirkt, erfolgt durch das doppelt wirkende Ventil selbst welches einen ringförmig abstehenden Kragen aufweist welcher, in seiner Bewegung nach oben und somit bei Öffnung der Abflussöffnung, auf die Stange des Ventils für die Luftzufuhr trifft und durch Komprimieren einer einstellbaren Feder für die Rückstellung des Ventils in Schließstellung, das Ventil öffnet. Durch Öffnen des Ventils für die Zufuhr atmosphärischer Luft in den Messbecher, kann die Flüssigkeitsdosis durch Gefälle frei in Richtung Knetmaschine abfließen. Die koaxiale Anordnung zwischen Messbecher, dessen Kopfteil, dem Ventilkörper und dem Betätigungskolben, ermöglicht einen einfachen Aufbau welcher eine Demontage und Montage ohne Werkzeuge und eine einfache Reinigung ermöglicht.

Die Erfindung wird anschließend anhand eines, in den beigelegten Zeichnungen schematisch dargestellten, Ausführungsbeispieles der erfindungsgemäßen Dosier- und Einbringvorrichtung von Zutaten in eine Knetmaschine näher erklärt; dabei haben die Darstellungen rein erklärenden, nicht begrenzenden Zweck.

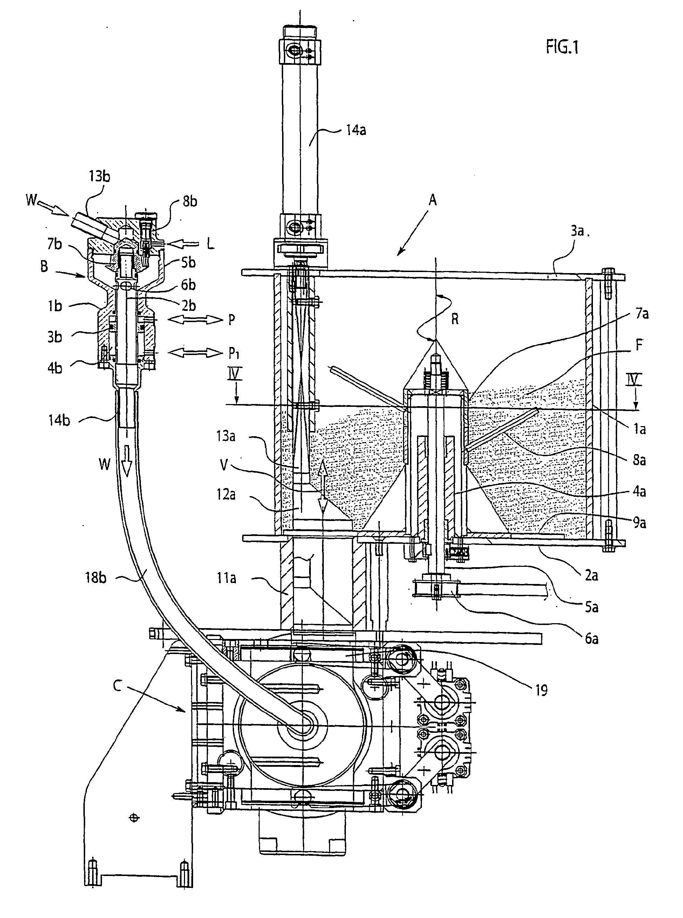

Die Fig. 1 zeigt in schematischer Vorderansicht und teilweise in Schnittdarstellung eine Knetmaschine welche an eine erfindungsgemäße Vorrichtung für die Dosierung und die Einbringung von mehlartigen und flüssigen Zutaten angeschlossen ist.

Die Fig. 2 zeigt schematisch und in vergrößertem Maßstab die in Fig. 1 dargestellte Vorrichtung für die Dosierung und Einbringung der flüssigen Zutaten in Beladungsfase mit dem doppelt wirkenden Ventil in unterer Arbeitsstellung wobei der Zufluss frei und der Abfluss verschlossen ist.

Die Fig. 3 zeigt die in Fig. 2 dargestellte Vorrichtung für die Dosierung und Einbringung von flüssigen Zutaten mit dem doppelt wirkenden Ventil in oberer Arbeitsstellung wobei der Zufluss der Flüssigkeit unterbrochen ist und der Abfluss der Flüssigkeitsdosis aus dem Messbecher sowie der Zufluss der atmosphärischen Luft in den Messbecher geöffnet sind.

Die Fig. 4 ist eine Schnittdarstellung gemäß der in Fig. 1 gezeigten Schnittebene IV-IV welche horizontal durch den Behälter für die mehlartigen Zutaten mit erfindungsgemäßer Dosier- und Einbringvorrichtung verläuft.

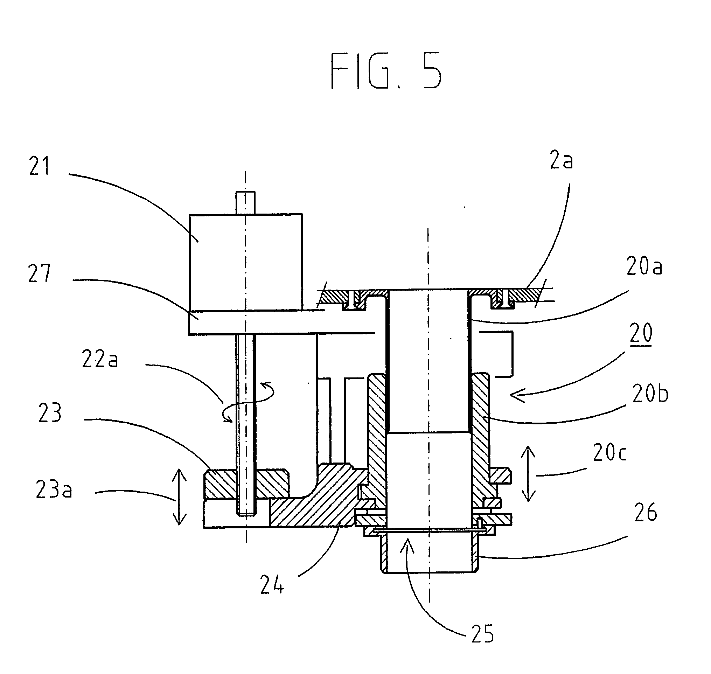

Die Fig. 5 zeigt schematisch die Schnittdarstellung eines Messbechers mit erfindungsgemäß teleskopisch veränderbarem Volumen wobei die Schnittebene, sei es die Achse des Messbechers als auch jene der Gewindespindel für die Verstellung des beweglichen Teiles des Messbechers, enthält.

Die Knetmaschine C ist im oberen Bereich mit einem Schieber 19 für die Öffnung und den Verschluss der Einbringöffnung für die mehlartigen Zutaten versehen während axial ein Einbringschlauch 18b für die flüssigen Zutaten vorgesehen ist. Über dem Schieber 19 ist ein zylindrischer Messbecher 11a für die Dosierung der mehlartigen Zutaten F befestigt welche in einem Behälter A mit Mantelwand 1 a, Boden 2a und Deckel 3a enthalten sind. Im Innern des zylindrischen Behälters A ist eine Welle 5a drehbar R, koaxial zur Achse des Behälters A gelagert; diese Welle trägt am oberen Ende ein koaxiales Rohrelement 7a welches mit radial abstehenden Rührelementen 8a ausgestattet ist während am unteren Ende des Rohrelementes ein am Boden 2a aufliegendes Speichenrad 9a als Ladevorrichtung mit Speichen 9e und freien Zwischenräumen 9d befestigt ist. An ihrem unteren Ende ist die Welle 5a mit einer Riemenscheibe 6a versehen welche von einem (nicht dargestellten) Motor angetrieben wird. Durch Drehung R der Welle 5a wird, über das Rohrelement 7a, das als Ladevorrichtung funktionierende Speichenrad 9a bewegt, wodurch das Mehl F welches durch Schwerkraft die Freiräume 9d zwischen den Speichen 9e ausfüllt, über die obere Füllöffnung des darunter vorgesehenen Messbechers 11 a geschoben wird; das Mehl fällt dabei nach unten und füllt progressiv den Messbecher 11 a. In Zeitabständen oder nach vollständigem Füllen des Messbechers 11 a, wird die Ladevorrichtung 9a, mit einem der Freiräume 9d entsprechend der Position der oberen Füllöffnung des Messbechers 11 a, angehalten und das im Messbecher enthaltene Mehl, durch Bewegung V der Stange 13a des Stößels 12a mittels Zylinder 14a, im Messbecher komprimiert. Anschließend, wenn der Stand des komprimierten Mehles im Innern des Messbechers 11a den oberen Rand des Messbechers 11a erreicht hat, wird, infolge einer Abspachtelung durch Drehung R des Speichenrades 9a, bei geöffnetem Schieber 19, die Mehldosis durch den Stößel aus den Messbecher geschoben um in die Knetmaschine zu fallen. Die Mehldosis kann durch Verändern der Anzahl der Komprimierungszyklen des Stößels verändert werden; es wird allerdings die Möglichkeit nicht ausgeschlossen die Dosis durch Ändern der Druckkraft des Stößels und/oder durch Ändern des Standes des Mehles innerhalb des Messbechers 11, zu verändern.

Gemäß einer weiteren Variante kann der Mehl-Messbecher mit unveränderlichem Volumen 11a durch einen Messbecher 20 mit teleskopisch veränderbarem 20c Volumen ersetzt werden welcher so wie der Messbecher mit unveränderlichem Volumen 11a am Boden 2a des Behälters A für das Mehl F befestigt ist und auf die selbe Weise gefüllt wird. Der Messbecher 20 mit veränderbarem Volumen besteht aus einem feststehendem zylindrischen oberen Teil 20a an welchem koaxial ein unterer zylindrischer Teil 20b, axial verstellbar 20c angebracht ist. Dieser Teil ist an einem, durch Motor 21 bewegtem, Trägerelement 24 befestigt, wobei der Motor von einem feststehendem Trägerelement 27 gehaltert ist und über eine drehbare 22a Gewindespindel 22 eine am Trägerelement 24 befestigte Schraubenmutter 23 bewegt. Der Boden des Messbechers 20 besteht aus einer beweglichen, z.B. in horizontalen Führungen am unteren Ende des beweglichen 20a Messbechers 20b verschiebbaren, Schieber 25. Unterhalb des beweglichen Schiebers ist ein rohrförmiger Stutzen 26 als Anschluss zur darunterliegenden Beschickungsöffnung der Knetmaschine C vorgesehen. Erfindungsgemäß ist der Mechanismus für die Änderung des Volumens des Messbechers 20 elektronisch mit der Vorrichtung der Gewichtserhebung der Dosis von Mehl F, welches aus dem Mehlbehälter A entnommen worden ist, verbunden. Auf diese Weise ist es möglich, mittels einem Programm des Gewichtsvergleiches und der Gewichtskorrektur, das Volumen des Messbechers, aufgrund des Gewichtes der vorher entnommenen Mehldosis, zu korrigieren um infolge von wenigen Dosiervorgängen eine Dosis zu erhalten welche, innerhalb minimaler Toleranzen, der theoretisch bestimmten Dosis entspricht. Das Dosiersystem mit Gewichtsüberprüfung und Korrektur des Volumens des Messbechers 20 ermöglicht es vor allem Dosierfehler zu eliminieren welche durch Unterschiede in der Granulation und/oder in der Feuchtigkeit sowie im Druck welcher durch das Mehl im Mehlbecher in der Fase des Füllens des Messbechers 20 wirkt, verursacht werden.
Im Falle der direkt am Messbecher durchgeführten Gewichtserhebung bietet sich die Möglichkeit der Korrektur der Dosis indem das Volumen des Messbechers aufgrund der Differenz zwischen dem erhobenen Gewicht und dem vorgegebenen Gewicht verändert wird und anschließend, bei Gewichtsüberschuss, der Schabvorganges wiederholt wird und, bei Gewichtsmangel, die Füllfase mit Pressen durch den Presskolben und der Schabvorgang wiederholt wird.

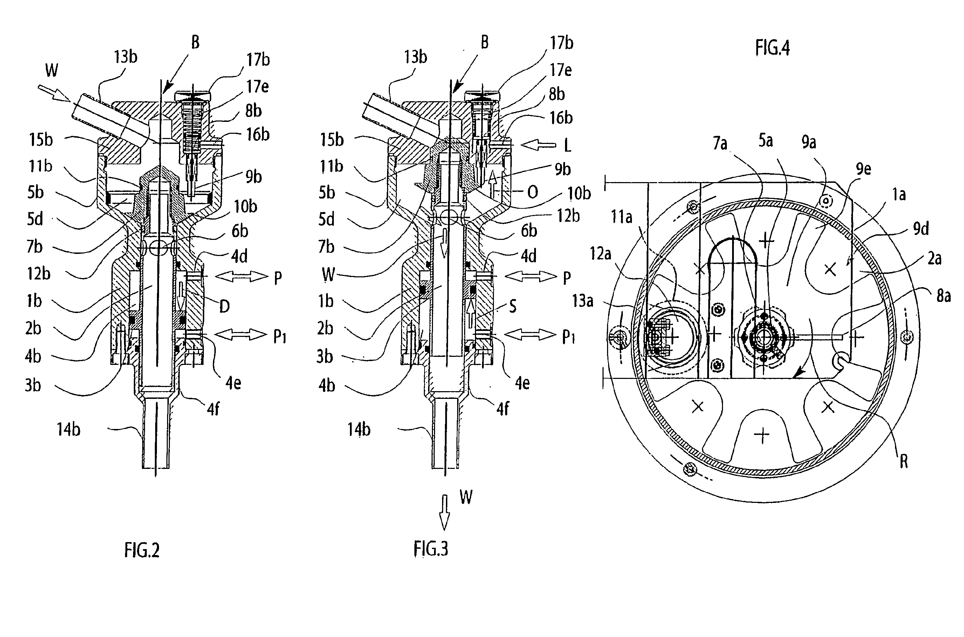

Das Wasser, bzw. die flüssigen Zutaten W, werden durch den Dosierer B abgemessen welcher aus einem zylindrischen Körper mit oberem, durch ein Kopfteil 15d verschlossenem, Messbecher 5b besteht; der untere Bereich weist einen, durch Kopfteil 4f verschlossenen, Zylinder 1b auf, in welchem ein Kolben 3b durch, über die Öffnungen 4d, 4e in den Hohlraum 4b des Zylinders 1b eingeleitete Druckluft P - P1, bewegt D - S wird. Der Kolben 3b ist mit einer rohrförmigen Kolbenstange 2b verbunden, deren oberes Ende ein doppelt wirkendes Ventil trägt welches aus dem Korpus 7b mit einer oberen Dichtung 11b, einer unteren Dichtung 12b und einem radial abstehendem Kragen 10b, besteht. Wenn der Korpus 7b des doppelt wirkenden Ventils die untere Stellung einnimmt, kann das Wasser, bzw. können die flüssigen Zutaten W durch Gefälle, aus einem höher gelegenen Behälter, über einen Anschlussstutzen 13b in den Raum des, mittels Einlegen von einem oder mehreren Ringen 5d eichbaren, Messbechers 5b zufließen; die im Messraum enthaltene Luft strömt dabei durch den Anschlussstutzen 13b in den höher gelegenen Wasserbehälter. Während dieser Beladung des Messbechers 5b ist der Abfluss des Wassers W in die Knetmaschine C durch die Dichtung 12b unterbrochen. Nachdem der Messbecher 5b vollständig gefüllt ist wird der Kolben 3b nach oben bewegt S um, über die rohrförmige Kolbenstange 2b, den Korpus des doppelt wirkenden Ventils 7b nach oben zu bewegen und dabei die Dichtung 12b aus ihrem Sitz zu heben um den Abfluss der Flüssigkeitsdosis W durch die Bohrungen 6b, den Hohlraum der rohrförmigen Kolbenstange 2b, den Abflussstutzen 14b und das Verbindungsrohr 18b, in die Knetmaschine C zu leiten. Der Abfluss der Flüssigkeitsdosis W erfolgt nur infolge Betätigung O des Ventils 8b für den Zufluss der filtrierten atmosphärischen Luft L über die Öffnung 16b, dabei wird die Ventilstange 9a durch den, vom Korpus 7b des doppelt wirkenden Ventils radial abstehenden, Kragen 10b während des Hubes nach oben, betätigt. Durch diesen Hub wird auch der Zufluss der Flüssigkeit W aus dem Behälter durch die Wirkung der Dichtung 11 b im entsprechenden Sitz im Kopfteil 15b des Messbechers 5b unterbrochen. Während der folgenden Beladung des Messbechers 5b (Fig. 2) erfolgt die Rückstellung in Schließstellung des Ventils 8b durch eine über eine Stellschraube 17b einstellbare Feder sobald der Kragen 10b mit dem Ventilkorpus sich nach unten bewegt hat und der Zufluss für die Flüssigkeit W in den Messbecher frei ist.

Die Erfindung schließt nicht aus, dass der Zylinder 4b und der entsprechende Kolben 3b koaxial über dem Messbecher 5b mit Kopfteil 15b angeordnet sind; in diesem Fall wird der Abfluss aus dem Messbecher 5b durch einen einfachen Stutzen mit innenliegendem Sitz für die untere Dichtung 12b des Ventiles 7b, erfolgen.

## Patentansprüche

1. Vorrichtung zur Dosierung und Einbringung von Zutaten in eine Knetmaschine (C) zur Herstellung kleiner Teigmengen für die Zubereitung einzelner Pizzas, Fladen oder dergleichen, wobei sei es für die mehlartigen Zutaten (F) als auch für die flüssigen Zutaten (W) jeweils ein spezifischer Messbecher (11a, 5b, 20) vorgesehen ist welcher unterhalb des jeweiligen entsprechenden Behälters der Zutaten und oberhalb der Knetmaschine (C) angeordnet ist und in welchen die Zutaten durch Gefälle zuströmen, bzw. aus welchen sie durch Gefälle abströmen **dadurch gekennzeichnet dass** der Boden des Messbechers (11a,20) für die mehlartigen Zutaten (F) durch einen Schieber (19) der Beladungsöffnung der Knetmaschine gebildet ist und dass im Inneren des Messbehälters (11a,20) ein Stößel (12a) wirkt (V) um die mehlartigen Zutaten (F) zu komprimieren und infolge Öffnung des Schiebers (19) diese in die Knetmaschine (C) zu befördern.

2. Vorrichtung zur Dosierung und Einbringung von Zutaten, gemäß Anspruch 1, **dadurch gekennzeichnet, dass** der Messbecher (11a) für die mehlartigen Zutaten (F) den Einbringungs- und Verbindungskanal zwischen dem Behälter (1 a, 2a, 3a) für die mehlartigen Zutaten (F) und der Knetmaschine (C) bildet und dass die mehlartigen Zutaten (F) von einer speichenradförmigen Ladevorrichtung (9a) welche drehbar (R) im Innern des Behälters (1a, 2a, 3a) gelagert ist über die obere Öffnung des Messbechers befördert werden.

3. Vorrichtung zur Dosierung und Einbringung von Zutaten, gemäß Anspruch 1, **dadurch gekennzeichnet, dass** der Messbecher (20) im Volumen veränderbar ist und aus einem oberen zylindrischen, feststehenden, am Boden (2a) des Behälters (A) für das Mehl (F) befestigten, Teil und einem unteren, axial am oberen Teil verschiebbaren (20c), zylindrischen Teil (20b), besteht, dass der untere axial verschiebbare Teil (20b) am unteren Ende mit einem beweglichen Schieber (25) ausgestattet ist welcher den Boden des Messbechers (20) bildet und dass die axiale Bewegung (20c) des unteren Teiles (20b) händisch, durch Motor (21) über einen Verschiebemechanismus (22, 23) oder durch einen Hydraulik- oder Pneumatikzylinder betätigt wird.

4. Vorrichtung zur Dosierung und Einbringung von Zutaten, gemäß den Ansprüchen von 1 bis 3, **dadurch gekennzeichnet, dass** der Behälter (A) für die mehlartigen Zutaten (F) und/oder der Messbecher mit veränderbarem Volumen (20) mit einer bekannten Vorrichtung für die Gewichtserhebung der Dosis der mehlartigen Zutaten (F) welche aus dem Behälter (A) entnommen wird, ausgestattet sind.

5. Vorrichtung zur Dosierung und Einbringung von Zutaten, gemäß Anspruch 1, **dadurch gekennzeichnet, dass** der Messbecher (5b) für die flüssigen Zutaten (W) im Innern ein doppelt wirkendes axial verschiebbares (D, S) Ventil (7b) aufweist welches mit zwei getrennten unter sich distanzierten Dichtungen (11b, 12b) ausgestattet ist, von welchen die obere (11b) bei oberer Arbeitsstellung des Ventils (7b) den Zufluss der Flüssigkeit (W) unterbindet während die untere (12b) in unterer Arbeitsstellung des Ventils (7b) den Abfluss der Flüssigkeitsdosis unterbindet und dass im oberen Bereich im Kopfteil (15b) des Messbechers (5b) ein Ventil (18b) für den Zufluss von filtrierter atmosphärischer Luft (L) in den Hohlraum des Messbechers (5b) vorgesehen ist.

6. Vorrichtung zur Dosierung und Einbringung von Zutaten, gemäß den Ansprüchen 1 und 5, **dadurch gekennzeichnet, dass** das doppelt wirkende Ventil (7b) einen radial vorspringenden umlaufenden Kragen (10b) für die Betätigung des Ventils (8b) für den Zufluss atmosphärischer Luft (L) aufweist.

7. Vorrichtung zur Dosierung und Einbringung von Zutaten, gemäß den Ansprüchen 1, 5 und 6, **dadurch gekennzeichnet, dass** die Betätigung des doppelt wirkenden Ventils (7b) durch einen, innerhalb eines Zylinders (4b) durch ein Druckmittel (P, P1) bewegten, Kolben (3b) erfolgt, wobei das obere Ende der Stange (2b) des Kolbens (3b) mit dem Ventil (7b) verbunden ist und dass der Abfluss der Füssigkeitsdosis (W) aus dem Messbecher (5b) zur Knetmaschine (C) durch die Kolbenstange (2b) erfolgt; wobei die Flüssigkeit radiale Bohrungen (6b) im oberen Bereich der Stange (2b) durchfließt welche mit der axialen Bohrung der Stange kommunizieren um am unteren Ende der Kolbenstange auszutreten und über das Verbindungsrohr (18b) in die Knetmaschine (C) zu gelangen.

8. Vorrichtung zur Dosierung und Einbringung von Zutaten, gemäß den Ansprüchen 1 und 5 und 6, **dadurch gekennzeichnet, dass** die Betätigung des doppelt wirkenden Ventils (7b) elektrisch oder mechanisch erfolgt.

9. Vorrichtung zur Dosierung und Einbringung von Zutaten, gemäß den Ansprüchen 1, 5 bis 8, **dadurch gekennzeichnet, dass** der Kopfteil (15b) in den oberen Teil des Messbechers (5b) eingeschraubt ist.

10. Verfahren zur Dosierung und Einbringung von Zutaten in eine Knetmaschine mittels Vorrichtung gemäß den Ansprüchen 1, 2 und 5 bis 9, **dadurch gekennzeichnet, dass** die Dosierung der mehlartigen Zutaten (F) und auch deren Einbringung getrennt von der Dosierung und der Einbringung der flüssigen Zutaten (W) erfolgt, dass die Dosierung sei es der mehlartigen Zutaten (F) als auch jene der flüssigen Zutaten (W) durch Gefälle der Zutaten in einen Messbecher (11a, 5b) erfolgt welcher auf einem niedrigeren Niveau als der entsprechende Behälter vorgesehen ist und dass die Dosis der mehlartigen Zutaten durch Verändern der Anzahl der durch den Stößel (12a) ausgeführten Komprimierungszyklen und/oder durch Verändern der Komprimierungskraft erfolgt während die Dosis der flüssigen Zutaten durch Verändern des Volumens des Messbechers (5b) durch Einlegen von Ringen (5d), welche unterschiedliche Volumen im Innern des Messbechers (5b) einnehmen, erfolgt

11. Verfahren zur Dosierung und Einbringung von Zutaten mittels der Vorrichtungen gemäß den Ansprüchen 1, 2, 3 und 4, **dadurch gekennzeichnet, dass** die Bestimmung der Dosis der mehlartigen Zutaten durch eine erste Dosierung mit Einstellung des Volumens des Messbechers (20) aufgrund empirischer Daten erfolgt, während die anschließende Dosierung oder die anschließenden Dosierungen infolge einer Korrektur der vorhergehenden Volumeneinstellung aufgrund der Abweichung des Gewichtes der vorher erstellten Dosis vom Sollgewicht erfolgt und dass die Erhebung des Gewichtes der entnommenen Dosis und die entsprechende Korrektur des Volumens des Messbechers, um bei der nachfolgenden Dosierung ein dem Sollwert näheres Gewicht zu erreichen, mittels elektronischem Rechner erfolgt.

12. Verfahren zur Dosierung und Einbringung von Zutaten mittels der Verfahren gemäß Anspruch 11, **dadurch gekennzeichnet, dass** die Erhebung des Gewichtes der Dosis der mehlartigen Zutaten (F) direkt am Messbecher (20) mit veränderbarem Volumen durchgeführt wird, wobei die Korrektur des Volumens des Messbechers (20) aufgrund der Abweichung des erhobenen Gewichtes vom Sollgewicht erfolgt und anschließend die Dosierung, bei Gewichtsüberschuss, durch Wiederholung des Schabvorganges und, bei Gewichtsmangel, durch Wiederholung des Füllvorganges, des Pressvorganges durch den Stößel und des Schabvorganges, durchgeführt wird.

13. Verfahren zur Dosierung und Einbringung von Zutaten gemäß Anspruch 10, **dadurch gekennzeichnet, dass** der Abfluss der flüssigen Zutaten (W) aus dem Messbecher (5b) durch Öffnen des Abflussventils 12b infolge der Öffnung des Ventils (8b) für den Zufluss von filtrierter atmosphärischer Luft (L) in den Innenraum des Messbechers (5b) erfolgt.

## Claims

1. Device for dosing and introducing ingredients into a kneading machine (C) in order to make small quantities of dough for the preparation of individual pizzas, pancakes or the like, wherein a specific measuring cup (11a, 5b, 20) is provided both for the floury ingredients (F) and for the liquid ingredients (W), said measuring cup being arranged below the particular, corresponding ingredient container and above the kneading machine (C), and the ingredients flow into said measuring cup by dropping therein and flow out thereof by dropping, **characterized in that** the base of the measuring cup (11a, 20) for the floury ingredients (F) is formed by a slide (19) in the loading opening of the kneading machine, and **in that** a ram (12a) acts (V) in the interior of the measuring container (11a, 20) in order to compress the floury ingredients (F) and to convey them into the kneading machine (C) as a result of opening of the slide (19).

2. Device for dosing and introducing ingredients, according to Claim 1, **characterized in that** the measuring cup (11a) for the floury ingredients (F) forms the introducing and connecting channel between the container (1a, 2a, 3a) for the floury ingredients (F) and the kneading machine (C), and **in that** the floury ingredients (F) are conveyed above the upper opening in the measuring cup by a loading device (9a) which is in the shape of a spoke wheel and is mounted rotatably (R) in the interior of the container (1a, 2a, 3a).

3. Device for dosing and introducing ingredients, according to Claim 1, **characterized in that** the measuring cup (20) can be changed in volume and comprises an upper cylindrical, fixed part fastened to the base (2a) of the container (A) for the flour (F), and a lower cylindrical part (20b) displaceable (20c) axially on the upper part, **in that** the lower, axially displaceable part (20b) is equipped at the lower end with a movable slide (25) which forms the base of the measuring cup (20), and **in that** the axial movement (20c) of the lower part (20b) is actuated manually, by motor (21) via a displacement mechanism (22, 23) or by a hydraulic or pneumatic cylinder.

4. Device for dosing and introducing ingredients, according to Claims 1 to 3, **characterized in that** the container (A) for the floury ingredients (F) and/or the measuring cup having a changeable volume (20) are equipped with a known device for raising the weight of the dose of floury ingredients (F) removed from the container (A).

5. Device for dosing and introducing ingredients, according to Claim 1, **characterized in that** the interior of the measuring cup (5b) for the liquid ingredients (W) has a double-action, axially displaceable (D, S) valve (7b) which is equipped with two separate, spaced-apart seals (11b, 12b), the upper (11b) of which prevents the inflow of liquid (W) in an upper operating position of the valve (7b), while the lower (12b) of which prevents the outflow of the liquid dose in the lower operating position of the valve (7b), and **in that** a valve (18b) for the inflow of filtered, atmospheric air (L) into the cavity of the measuring cup (5b) is provided in the upper region in the head part (15b) of the measuring cup (5b).

6. Device for dosing and introducing ingredients, according to Claims 1 and 5, **characterized in that** the double-action valve (7b) has a radially projecting, encircling collar (10b) for actuating the valve (8b) for the inflow of atmospheric air (L).

7. Device for dosing and introducing ingredients, according to Claims 1, 5 and 6, **characterized in that** the double-action valve (7b) is actuated by a piston (3b) which is moved within a cylinder (4b) by means of a pressure means (P, P1), the upper end of the rod (2b) of the piston (3b) being connected to the valve (7b), and **in that** the liquid dose (W) flows out of the measuring cup (5b) to the kneading machine (C) through the piston rod (2b), the liquid flowing through radial bores (6b) in the upper region of the rod (2b), said bores communicating with the axial bore of the rod, in order to emerge at the lower end of the piston rod and to pass into the kneading machine (C) via the connecting tube (18b).

8. Device for dosing and introducing ingredients, according to Claims 1, and 5 and 6, **characterized in that** the double-action valve (7b) is actuated electrically or mechanically.

9. Device for dosing and introducing ingredients, according to Claims 1, 5 to 8, **characterized in that** the head part (15b) is screwed into the upper part of the measuring cup (5b).

10. Method for dosing and introducing ingredients into a kneading machine by means of a device according to Claims 1, 2, and 5 to 9, **characterized in that** the dosing of the floury ingredients (F) and also the introduction thereof take place separately from the dosing and the introduction of the liquid ingredients (W), **in that** the dosing both of the floury ingredients (F) and of the liquid ingredients (W) takes place by the ingredients dropping into a measuring cup (11a, 5b) provided at a lower level than the corresponding container, and **in that** the dose of floury ingredients takes place by changing the number of compression cycles executed by the ram (12a) and/or by changing the compression force, while the dose of liquid ingredients takes place by changing the volume of the measuring cup (5b) by the insertion of rings (5d) which take up different volumes in the interior of the measuring cup (5b).

11. Method for dosing and introducing ingredients by means of the devices according to Claims 1, 2, 3 and 4, **characterized in that** the dose of floury ingredients is determined by a first dosing with adjustment of the volume of the measuring cup (20) on the basis of empirical data, while the subsequent dosing or the subsequent dosings takes/take place as a consequence of a correction of the preceding adjustment of the volume on the basis of the deviation of the weight of the previously established dose from the desired weight, and **in that** the raising of the weight of the removed dose and the corresponding correction of the volume of the measuring cup, in order, during the subsequent dosing, to achieve a closer weight to the desired value, take place by means of an electronic computer.

12. Method for dosing and introducing ingredients by means of the method according to Claim 11, **characterized in that** the raising of the weight of the dose of floury ingredients (F) is carried out directly at the measuring cup (20) having a variable volume, the correction of the volume of the measuring cup (20) taking place on the basis of the deviation of the raised weight from the desired weight, and subsequently, in the event of excess weight, the dosing being carried out by repeating the scraping operation and, if the weight is deficient, by repeating the filling operation, the pressing operation by the ram and the scraping operation.

13. Method for dosing and introducing ingredients according to Claim 10, **characterized in that** the liquid ingredients (W) flow out of the measuring cup (5b) by opening the outflow valve (12b) as a result of the opening of the valve (8b) for the inflow of filtered atmospheric air (L) into the interior of the measuring cup (5b).

## Revendications

1. Dispositif pour doser et introduire des ingrédients dans un pétrin (C), pour la fabrication de petites quantités de pâte pour la préparation de pizzas, galettes, ou autres, individuelles, dans lequel, que ce soit pour les ingrédients (F) du type farine qu'également pour les ingrédients (W) liquides, chaque fois étant prévu un verre gradué (11a, 5b, 20) spécifique, disposé au-dessous du récipient correspondant respectif des ingrédients et au-dessus du pétrin (C) et dans lequel les ingrédients affluent par effet de la gravité ou d'où ils s'échappent par effet de la gravité, **caractérisé en ce que** le fond du verre de mesure (11a, 20) pour les ingrédients (F) du type farine est formé par un registre (19) de l'ouverture de chargement du pétrin, et **en ce que**, à l'intérieur du récipient de mesure (11a, 20), agit (V) un poussoir (12a) pour comprimer les ingrédients (F) du type farine et, par suite de l'ouverture du registre (19), transférer ceux-ci à l'intérieur du pétrin (C).

2. Dispositif pour doser et introduire des ingrédients, selon la revendication 1, **caractérisé en ce que** le verre de mesure (11a) pour les ingrédients (F) de type farine forme le canal d'introduction et de liaison entre le récipient (1a, 2a, 3a) pour les ingrédients (F) de type farine et le pétrin (C), et **en ce que** les ingrédients (F) de type farine sont transférés d'un dispositif de chargement (9a) en forme de roue à rayons, monté à rotation (R) à l'intérieur du récipient (1a, 2a, 3), en passant par l'ouverture supérieure du verre de mesure.

3. Dispositif pour doser et introduire des ingrédients, selon la revendication 1, **caractérisé en ce que** le volume du verre de mesure (20) est modifiable et est composé d'une partie cylindrique supérieure, stationnaire, fixée au fond (2a) du récipient (A) pour la farine (F), et d'une partie inférieure (20b) cylindrique, déplaçable (20c) axialement sur la partie supérieure, **en ce que** la partie inférieure (20b), déplaçable axialement, est équipée, à l'extrémité inférieure, d'un registre (25) mobile, qui forme le fond du verre de mesure (20), et **en ce que** le déplacement axial (20c) de la partie inférieure (20b) est actionné manuellement, au moyen d'un moteur (21), par l'intermédiaire d'un mécanisme de déplacement (22, 23) ou au moyen d'un vérin hydraulique ou pneumatique.

4. Dispositif pour doser et introduire des ingrédients, selon les revendications 1 à 3, **caractérisé en ce que** le récipient (A) pour les ingrédients (F) du type farine et/ou le verre de mesure à volume (20) modifiable sont équipés d'un dispositif connu pour augmenter le poids de la dose des ingrédients (F) du type farine, prélevée du récipient (A).

5. Dispositif pour doser et introduire des ingrédients, selon la revendication 1, **caractérisé en ce que** le verre de mesure (5b) pour les ingrédients liquides (W) présente intérieurement une soupape (7b) à double action, déplaçable axialement (D, S), équipée de deux joints d'étanchéité (11b, 12b) séparés, écartés entre eux, dont le supérieur (11b) interrompt l'afflux du liquide (W) lorsque la soupape (7b) se trouve à la position de travail supérieure, tandis que l'inférieur (12b) interrompt l'évacuation de la dose de liquide, lorsque la soupape (7b) se trouve à la position de travail inférieure, et **en ce qu'**une soupape (18b), pour l'amenée d'air (L) atmosphérique filtré dans l'espace creux du verre de mesure (5b), est prévue dans la zone supérieure, dans la partie tête (15b) du verre de mesure (5).

6. Dispositif pour doser et introduire des ingrédients, selon les revendications 1 et 5, **caractérisé en ce que** la soupape (7b) à double action présente une collerette (10b) de pourtour, en saillie radialement, pour l'actionnement de la soupape (8b) pour l'amenée d'air (L) atmosphérique.

7. Dispositif pour doser et introduire des ingrédients, selon les revendications 1, 5 et 6, **caractérisé en ce que** l'actionnement de la soupape (7b) à double action s'effectue au moyen d'un piston (3b), déplacé à l'aide d'un fluide sous pression (P, P1) à l'intérieur d'un cylindre (4b), l'extrémité supérieure de la tige (2b) du piston (3b) étant reliée à la soupape (7b), et **en ce que** l'évacuation de la dose de liquide (W) hors du verre de mesure (5b) vers le pétrin (C) s'effectue au moyen de la tige du piston (2b), le liquide traversant des perçages (6b) radiaux ménagés dans la zone supérieure de la tige (2b), qui communiquent avec le perçage axial de la tige pour sortir à l'extrémité inférieure de la tige du piston et arriver dans le pétrin (C), en passant par le tube de liaison (18b).

8. Dispositif pour doser et introduire des ingrédients, selon les revendications 1 et 5 et 6, **caractérisé en ce que** l'actionnement de la soupape (7b) à double action se fait électriquement ou mécaniquement.

9. Dispositif pour doser et introduire des ingrédients, selon les revendications 1, 5 à 8, **caractérisé en ce que** la partie tête (15b) est insérée par vissage dans la partie supérieure du verre de mesure (5b).

10. Procédé pour doser et introduire des ingrédients dans un pétrin, au moyen d'un dispositif selon les revendications 1, 2 et 5 à 9, **caractérisé en ce que** le dosage des ingrédients (F) de type farine et, également, leur introduction s'effectuent séparément du dosage et de l'introduction des ingrédients liquides (W), **en ce que** le dosage, que ce soit des ingrédients (F) de type farine qu'également celui des ingrédients liquides (W), s'effectue par effet de la gravité sur les ingrédients, dans un verre de mesure (11a, 5b), prévu à un plus bas niveau que le récipient correspondant, et **en ce que** la dose des ingrédients de type farine est fixée par modification du nombre de cycles de compression effectués par le poussoir (12a) et/ou par modification de la force de compression, tandis que la dose des ingrédients liquides est fixée par modification du volume du verre de mesure (5b), par insertion de bagues (5d) occupant différents volumes à l'intérieur du verre de mesure (5b).

11. Procédé pour doser et introduire des ingrédients, au moyen des dispositifs selon les revendications 1, 2, 3 et 4, **caractérisé en ce que** la détermination de la dose des ingrédients de type farine est effectuée grâce à un premier dosage avec réglage du volume du verre de mesure (20), d'après des données empiriques, tandis que le dosage subséquent ou les dosages subséquents est ou sont effectué(s) par suite d'une correction du réglage de volume précédent, d'après l'écart du poids de la dose établie préalablement par rapport à un poids de consigne, et **en ce que** l'augmentation du poids de la dose prélevée et la correction correspondante du volume du verre de mesure, pour obtenir un poids plus proche de la valeur de consigne lors du dosage subséquent, sont effectués à l'aide d'un calculateur électronique.

12. Procédé pour doser et introduire des ingrédients, au moyen des procédés selon la revendication 11, **caractérisé en ce que** l'augmentation du poids de la dose des ingrédients (F) de type farine est effectuée directement sur le verre de mesure (20) à volume modifiable, la correction du volume du verre de mesure (20) est effectuée d'après l'écart entre le poids augmenté et le poids de consigne et, ensuite, en cas d'excès de poids, le dosage est effectué par répétition du processus de raclage et, en cas d'insuffisance de poids, par répétition du processus de remplissage, du processus de pressage au moyen du poussoir et du processus de raclage.

13. Procédé pour doser et introduire des ingrédients selon la revendication 10, **caractérisé en ce que** l'évacuation des ingrédients liquides (W) hors du verre de mesure (5b) s'effectue par ouverture de la soupape d'évacuation (12b), par suite de l'ouverture de la soupape (8b) pour l'amenée d'air (L) atmosphérique filtré dans l'espace intérieur du verre de mesure (5b).
